# EUROPEAN PATENT APPLICATION

(11) **EP 3 805 184 A1**
(43) Date of publication of application: **14.04.2021**
(21) Application number: 19759629.9
(22) Date of filing: 24.05.2019
(51) Int. Cl.: C04B 35/111, B22F 3/00, B22F 3/20, C04B 35/447, C04B 35/453, C04B 35/46, C04B 35/486, C04B 35/56, C04B 35/58, C04B 35/626, C04B 35/634, B33Y 10/00, B33Y 70/00

(54) **METHOD FOR OBTAINING A PIECE BY FUSED FILAMENT DEPOSITION MODELLING**

(30) Priority: 24.05.2018 ES 201830503
(71) Applicant: Consejo Superior De Investigaciones Científicas, 28006 Madrid (ES)
(72) Inventor: FERRÁNDEZ MONTERO, Ana, 28040 Madrid (ES); FERRARI FERNÁNDEZ, Begoña, 28049 Madrid (ES); SÁNCHEZ HERENCIA, Antonio Javier, 28049 Madrid (ES); GONZÁLEZ GRANADOS, Zoilo, 28049 Madrid (ES); GONZÁLEZ LÓPEZ, Francisco Javier, 28049 Madrid (ES); YUS DOMÍNGUEZ, Joaquín Luis, 28049 Madrid (ES); GONZÁLEZ CARRASCO, Jose Luis, 28040 Madrid (ES); LIEBLICH RODRÍGUEZ, Marcela, 28040 Madrid (ES)
(74) Representative: Pons
(86) International application number: PCT/ES2019/070348
(87) International publication number: WO 2019/224418

(57) **Abstract**

The present invention relates to a method for obtaining a composite material piece or a ceramic and/or metal piece by fused filament deposition modeling. The present invention is framed in the area of materials science and is therefore of interest for industries that manufacture composite materials composed of a polymer, ceramic and metal matrix for applications in aeronautics, production of biomaterials, energy generation/storage devices and refractory materials used in severe service conditions.

## Description

The present invention relates to a method for obtaining a composite material piece or a ceramic and/or metal piece by fused filament deposition modeling.

The present invention is framed in the area of materials science and is therefore of interest for industries that manufacture composite materials composed of a polymer, ceramic and metal matrix for applications in aeronautics, production of biomaterials, energy generation/storage devices and refractory materials used in severe service conditions.

### BACKGROUND OF THE INVENTION

The processing of composite materials using rapid prototyping techniques has experienced exponential growth in recent years, since they favor the formation of complex geometries or customised shapes, without needing to use molds, which increase manufacturing costs and times.

Of the range of available 3D printing technologies, Fused Deposition Modeling (FDM) or Fused Filament Fabrication (FFF) have a series of advantages that put them at the forefront of additive manufacturing. It is a methodology applicable to a wide range of materials based on the use of thermoplastic polymers such as polylactic acid, acetonitrile-butadiene-styrene, nylon, etc., which may act as a unique, matrix or structuring material, depending on the amount of thermoplastic contained by the final printed and/or sintered piece.

The limitation inherent to fused printing is derived from the thermal properties of the thermoplastic polymer used. Similarly to how it is done in other industrial fused fabrication processes, such as injection molding [Preparation of articles using metal injection molding. US 20020144571 A1. EP 0465940 A3], the mixture of the different phases that form the final composite material is carried out conventionally in a double spindle extruder, wherein the thermoplastic polymer is fused, exceeding in all cases its glass transition temperature (Tg) and melting temperature (Tm), during the processing time of the initial mixture or of the composite raw material. Indeed, to ensure the homogeneity of the final mixture, the mixing process of the different raw materials has an associated milling process and a second fused mixing process, repeating this milling protocol and mixing as many times as necessary. Therefore, the conventional fused mixing process may occasionally cause thermal degradation of the material and/or the final mixture.

This limitation is aggravated when printing an organic/inorganic composite material, wherein the thermoplastic is the matrix or the structuring additive of the process, since the melting points (Tm) and glass transition temperatures (Tg) of inorganic materials far exceed the temperature ranges normally used in conventional mixing methods (250°C-270°C). Additionally, in fused mixing, inorganic particles are mixed with the fused thermoplastic polymer and the high viscosity of these mixtures (> 100 Pa·s) limits both the amount of inorganic particles and their dispersion in the thermoplastic matrix/structuring additive. Therefore, the additive technique often cannot be applied directly to the printing of pieces with a high inorganic particle load. Consequently, printing accuracy decreases and compromises the final finish of the printed piece. Additionally, in the case of fabrication by printing of 100% inorganic pieces, the amount of thermoplastic polymer to satisfactorily print is usually so high (> 30% by volume) that it affects the mechanical consistency and integrity of the piece, during the shrinkage processes generated during the thermal sintering treatment that consolidate the inorganic structure of the manufactured pieces.

The research carried out to date on printing techniques focuses on improving parameters related to surface finish, dimensional accuracy, mechanical properties or process efficiency. In fused printing, in order to palliate the limitations of the aforementioned process, modifications to the extrusion process have been proposed, such as variations in 3D dosing and filament feeding speeds, changes in pressure and temperature gradients, modification of nozzle designs, studies of fused material viscosities, addition of stabilisers or other additives, trajectory planning, orientation of pieces, etc. [S.C. Ligon, R. Liska, J. Stampfl, M. Gurr, R. Mülhaupt, Polymers for 3D Printing and Customized Additive Manufacturing, Chem. Rev. 117 (2017) 10212-10290. doi:10.1021/acs.chemrev.7b00074]. Research efforts devoted to the mixing process, despite being especially relevant, are scarce, although the dispersion of inorganic particles in the polymer directly affects the homogeneity of the extruded filaments and, therefore, the specific properties of the final material. Indeed, it has been shown that the passage of composite materials in semi-fused state (in the form of granules or filaments) through a nozzle can break, cut or agglomerate the particles. This agglomeration effect could increase when using nanometric-sized particles, causing loss of mechanical properties, since the effect caused by shearing in the printed material is a direct function of the particle/polymer interface.

Conventionally, when printing thermoplastic and inorganic hybrid materials, after mixing the raw materials, the milled or ground material should pass through an extruder, wherein the fused mixture passes through a nozzle with a specific diameter and upon cooling acquires the form of a filament. This filament is the conventional feeding for this printing method. [Ji Hongbing; Dai Wen; Zeng Yongbin, Metal or ceramic consumable item for FDM 3D printing, preparation method for metal or ceramic consumable item and finished product printing method, CN105665697, 2016].

In a literature review of the production of filaments or hybrid raw material for fused printing [S. Singh, S. Ramakrishna, R. Singh, Material issues in additive manufacturing: A review, J. Manuf. Process. 25 (2017) 185-200. doi:10.1016/j.jmapro.2016.11.006], basic aspects such as the proportion of constituent materials, the composition and nature thereof, etc., and their effects on the mechanical properties of the manufactured materials are described. But also literature references summarize the manner in which different authors have proposed alternative routes for mixing, such as the use of milling prior to extrusion, in a centrifugal mill [M. Nikzad, S.H. Masood, I. Sbarski, Thermo-mechanical properties of highly filled polymeric composites for Fused Deposition Modeling, Mater. Des. 32 (2011) 3448-3456. doi:10.1016/j.matdes.2011.01.056], cryogenic milling or using an single-screw extruder with dry pre-mixing of the raw materials [S.H. Masood, W.Q. Song, Development of new metal/polymer materials for rapid tooling using Fused Deposition Modelling, Mater. Des. 25 (2004) 587-594. doi:10.1016/j.matdes.2004.02.009].

In more recent papers, novel mixing methodologies have been carried out in liquid medium. M. Thuyet-Nguyen et al. have prepared a Ni/ABS mixture by drop-casting using a weight ratio of 2:1 and 1:1 [M. Thuyet-Nguyen, H. Hai-Nguyen, W.J. Kim, H.Y. Kim, J.-C. Kim, Synthesis and characterization of magnetic Ni/ABS nanocomposites by electrical explosion of wire in liquid and solution blending methods, Met. Mater. Int. 23 (2017) 391-396. doi:10.1007/s12540-017-6533-z], while J. Canales et al. have patented a method for obtaining filaments from slurries using a composition ranging 30%-70% by weight of ceramic material, which includes a complex formula/polymer blend, where printing is based on the presence of gelling agents that retain their structure above the Tg [Canales Vázquez Jesus; Sanchez Bravo Gloria Begoña; Marín Rueda Juan Ramon; Yagüe Alcaraz Vicente; Lopez Lopez Juan Jose, Method for Obtaining Ceramic Barbotine for the Production of Filaments for 3D-FDM Printing, Barbotine Obtained using SAID Method, and Ceramic Filaments, WO2017191340, 2017]. None of the proposed processes envisages the step of stabilisation and/or dispersion of the inorganic particles in the liquid medium and flux.

In printing of composite and purely inorganic materials, the main problem lies in obtaining a raw material in the form of a filament, with high inorganic load, metal or ceramic, homogeneously dispersed in the polymer, to print consistent pieces, with reproducible final properties, such as densities, mechanical and functional properties. Therefore, it is necessary to develop new methods.

### DESCRIPTION OF THE INVENTION

The present invention relates to a method for obtaining a piece having a composition selected from a purely ceramic or metal material and a composite material, by fused filament deposition modeling.

The method of the present invention is of special interest to end users, to industries that manufacture composite materials with polymer matrix, in applications ranging from aeronautics to biomaterials and inorganic materials (ceramic and/or metal or metal and/or ceramic matrix composites), in energy generation/storage devices, biomaterials and refractory metals and compounds used in severe service conditions. It significantly impacts industrial sectors that engage in the manufacture and marketing of processed raw material and/or marketing of consumer goods engineering solutions.

In a first aspect, the present invention relates to a method for obtaining a piece by fused filament deposition modeling (hereinafter, "method of the invention") which comprises the following step:
a) preparing a dispersed and stable suspension of inorganic particles,
b) removing the solvent from the suspension obtained in step (a),
c) redispersing the product obtained in step (b) in a polymer solution comprising at least one thermoplastic,
d) drying the product obtained in step (c) in the absence of temperature,
e) determining the extrusion window of the product obtained in step (d),
f) extruding the product of step (d) in a temperature range between the melting temperature and the initial decomposition temperature, obtained in step (e), and
g) printing the 3D pieces using the product obtained in step (f) by means of the fused filament deposition modeling technique.

Step (a) of the method of the invention relates to the preparation of a disperse and stable suspension of inorganic particles.

Any solvent can be used to prepare the suspension, even water.

The inorganic particles used in step (a) are metallic powder, ceramic powder or a combination thereof. Said inorganic particles may be of any size permitted by the fused filament deposition modeling technique, including nanometric size. Also, the inorganic particles of step (a) of the present invention may have any shape.

A preferred example of inorganic metallic powder particles are
- biocompatible metals such as iron, magnesium, titanium,
- refractory metals such as nickel, titanium and cobalt, and
- a combination thereof.

Preferred examples of inorganic ceramic powder particles are
- bioactive ceramics such as hydroxyapatite and bioglass,
- semi-conducting ceramics such as titanium dioxide and zinc oxide,
- ceramics with high chemical resistance in extreme conditions such as alumina, zirconia, nitrides and carbides, and
- any combination thereof.

It should be noted that inorganic particles are dispersed by mechanical or sonic methods in the suspension.

Step (b) of the method of the invention relates to the removal of the solvent from the suspension obtained in step (a).

Preferably, said step (b) is carried out by means of centrifugation or filtration.

Step (c) of the method of the invention relates to the redispersion of the product obtained in step (b) using a polymer solution comprising
- at least one polymer or a thermoplastic copolymer.

Examples of thermostable polymers or copolymers are polyethylene, polylactic acid, polyethylene glycol, polycaprolactone, nylon, acrylonitrile and styrene butadiene.

In a preferred embodiment of the method of the present invention, the polymer solution of step (c) also comprises a plasticiser, a dye or an anti-foaming agent.

It should be noted that inorganic particles are redispersed by mechanical or sonic methods in the suspension.

Step (d) of the method of the present invention relates to the drying of the product obtained in step (c) in the absence of temperature to avoid the deterioration of the thermostable polymer matrix. Said step (d) is carried out at low pressure in a rotary evaporator or by freezing-sublimation.

In step (e) of the method of the present invention determination of the extrusion window of the product obtained in step (d) is carried out. The determination of the extrusion window is an advantage, since it optimises the subsequent extrusion method.

"Extrusion window" is understood to be the temperatures that must be known to specify the temperature range in which fused filament deposition modeling can be carried out. Specifically, the temperatures to be determined are as follows:
- melting temperature
- initial decomposition temperature

The determination of the extrusion window is preferably carried out by means of thermogravimetry and/or differential scanning calorimetry.

In step (f) of the method of the invention, the extrusion of the product obtained in step (d) is carried out in a temperature range between the melting temperature and the initial decomposition temperature obtained in step (e). Within this temperature range, printing parameters such as
- Input nozzle diameter
- Output nozzle diameter
- Fused filament diameter
- Height from which the deposition is made
- Printing or deposition speed
- Etc.
can be easily selected.

For example, one advantage of the method of the present invention would be that step (f) can be carried out using any output nozzle, since the thermal parameters of the initial mixture have been previously determined for the specific composition.

The last step of the method of the invention, step g), relates to printing the 3D pieces using the product obtained in step (f) by means of the fused filament deposition modeling technique.

"Fused filament deposition modeling", in the present invention, is understood to be a modeling technique by deposition of a fused mixture wherein an additive technique is used, such that a printed piece or material is obtained by depositing the material on one or more successive layers.

For example, one advantage of the method of the present invention would be that step (g) can also be carried out using any input nozzle, since the diameter of the filament has been defined in step (f) of the extrusion, and any output nozzle, since the thermal parameters of the initial mixture have been previously determined for the specific composition.

In the present invention, the piece obtained is a composite material, a purely ceramic piece, a purely metallic piece or a piece formed from a ceramic-metal mixture.

When the piece obtained is purely ceramic, purely metallic or is a piece formed from a ceramic-metal mixture:
- step (a) of the preparation of a disperse and stable suspension of inorganic particles is carried out by surface adsorption of a stabiliser/dispersant of a nature such that the homogeneous and stable dispersion of the inorganic particles in the polymer matrix prevails, being preferably a surfactant polymer or a polyelectrolyte,
- and the method comprises the following additional steps:
   (h), after step (g), of removing the polymer comprising the product obtained in step (g) by dissolution or thermal decomposition, and
   (i) sintering the product obtained in step (h).

Sample surfactants are dodecylsulfate, oleimine and hexadecyltrimethylammonium bromide.

Examples of polyelectrolytes are a polyacrylate, a citrate or a polyamine.

In a preferred embodiment of the method of the present invention,
- when the piece obtained is purely ceramic, purely metallic or is a piece formed from a ceramic-metal mixture and
- when the piece is porous,
the volume percent of the inorganic particles in the mixture obtained in step (d) is greater than 30%.

In another preferred embodiment of the method of the present invention,
- when the piece obtained is purely ceramic, purely metallic or is a piece formed from a ceramic-metal mixture and
- when the piece is dense,
the volume percent of the inorganic particles in the mixture obtained in step (d) is greater than 50 %.

When the piece obtained is a composite material:
- step (a) of the preparation of a disperse and stable suspension of inorganic particles is carried out by surface adsorption of a stabiliser/dispersant of a nature such that the homogeneous and stable dispersion of the inorganic particles in the polymer matrix prevails, being preferably a polyelectrolyte chosen in accordance with the functional group so that it reacts with the thermostable polymer matrix.
- the volume percent of the inorganic particles in the mixture obtained in step (d) is greater than 1 %.

As mentioned earlier, examples of thermostable polymers or copolymers that form part of the composite material are polyethylene, polylactic acid, polyethylene glycol, polycaprolactone, nylon, acrylonitrile and styrene butadiene.

Examples of polyelectrolytes of these thermostable polymers or copolymers are polyacrylates, citrates or polyamines.

One advantage of the method of obtaining the present invention, for example, would be that since step (c) the particles interact with the polymer mixture, since the particles have adsorbed the stabiliser/dispersant on the surface in step (a), which was selected in accordance with its interaction in the redispersion of step (c) with the solution polymers.

Another advantage of the method of the present invention, for example, would be that step (c) is carried out at room temperature, which preserves the properties of the polymer matrix in the final piece of composite material.

In a preferred embodiment of the method of the present invention, the volume percent of the inorganic particles in the mixture obtained in step (d) is greater than 10%, preferably greater than 15%.

Throughout the description and in the claims, the word "comprises" and its variants are not intended to exclude other technical characteristics, additives, components or steps. For those skilled in the art, other objects, advantages and characteristics of the invention may be deduced from both the description and the practical use of the invention. The following examples and figures are provided by way of illustration and are not intended to be limiting of the present invention.

### BRIEF DESCRIPTION OF THE FIGURES

Figure 1 shows micrographs obtained by scanning electron microscopy at different magnifications of the 3D scaffold structure of the final piece, printed using the filament of composition (1) of example 1: 1A, general image of the scaffold structure, 1B, micrograph of the cross-section of one of the rods and, 1C, a detail of the microstructure of this section.
Figure 2 shows thermogravimetric analysis (2A) and differential scanning calorimetry (2B) graphs of the initial mixture of the composition (1) of example 1, obtained in granule form after the drying of step (d). In the graphs, the initial decomposition temperature (in 2A) and melting temperature (in 2B) are indicated by an arrow.
Figure 3 shows images of the initial mixture of the composition (2) of example 1, obtained in granule form after drying: 3A, photograph of the granules, and 3B, detailed micrograph of the microstructure of the granules obtained by scanning electron microscopy.
Figure 4 shows images of the filament of composition (2) of example 1, obtained after extrusion: 4A, photograph of the filament, and 4B, micrograph of the cross-section of the filament obtained by scanning electron microscopy.
Figure 5 shows an image of the three-dimensional scaffold structure of the final piece, printed using the filament of composition (2) of example 1.
Figure 6 shows images of the 3D scaffold structure of the final piece, printed using the filament of composition (3) of example 1: 6A, photograph of the final piece, and 6B, detailed micrograph of the microstructure obtained by scanning electron microscopy.
Figure 7 shows micrographs obtained by scanning electron microscopy at different magnifications of the 3D scaffold structure of the final piece, printed using the filament of composition (1) of example 2: 7A, general image of the scaffold structure of the printed piece, 7B, micrograph of the cross-section of one of the rods and, 7C and 7D, details of the microstructure of the cross-section.
Figure 8 shows images of the three-dimensional scaffold structure of the final piece obtained after the thermal treatment and printed using the filament of composition (1) of example 2: 8A, photograph of the final piece, and 8B, micrograph of the general scaffold structure of the final piece, and 8C, detailed micrograph of the microstructure of the cross-section of one of the rods, obtained by scanning electron microscopy.
Figure 9 shows micrographs obtained by scanning electron microscopy at different magnifications of the detail of the microstructure of the cross-section of a filament extruded from the composition (2) of example 2: 9A, before the thermal treatment, and 9B, after the thermal treatment.
Figure 10 shows images of the initial mixture of the composition (3) of example 2, obtained in granule form after drying: 10A, photograph of the granules, 10B and 10C, detailed micrographs of the microstructure of the granules obtained by scanning electron microscopy.

### EXAMPLES

The invention is illustrated below by trials conducted by the inventors, which demonstrate the effectiveness of the product of the invention.

### Example 1: Printing of final pieces of a composite material.

Suspensions of metallic/ceramic particles are prepared by adding a cationic polyelectrolyte as a stabiliser/dispersant, such as:
(1) Hydroxyapatite particles (HA), with an average particle size of 2 µm, with a concentration <35% by volume in aqueous medium at a fixed pH of 8, adding ammonium tetramethyl (HTMA). Polyethyleneamine (PEI >25,000 KDa) is added to this suspension in a proportion of 0.2% by weight with respect to the weight of the ceramic powder. The mixture is subjected to a homogenising milling process for 45 min.
(2) Magnesium metal (Mg) particles, with an average particle size of 25 µm, with a concentration <35% by volume in aqueous medium at a fixed pH of 12, adding ammonium tetramethyl (HTMA). Polyethyleneamine (PEI >25,000 KDa) is added to this suspension in a proportion of 0.2% by weight with respect to the weight of Mg and the mixture is subsequently subjected to a homogenising milling process for 45 min.
(3) Haloisite nanotubes (NTH), with an average diameter >30 nm and a length <150 µm, with a concentration of 100 g/l in aqueous medium. Polyethyleneamine (PEI >25,000 KDa) is added to this suspension in a proportion of 2% by weight with respect to the weight of the ceramic powder and the mixture is subsequently dispersed applying ultrasound for 1 min. using a 400 W probe.

The resulting suspensions are centrifuged twice, a first time to remove the water and change the solvent for tetrahydrofuran (THF) and a second time to remove this last organic solvent. The particles modified with the polyelectrolyte are added under mechanical stirring to a polymer solution in THF in the desired proportion, being said proportion:
(1) 15/85 by volume of HA/PLA.
(2) 7/93 by volume of Mg/Polymer, being the polymer a mixture of a thermoplastic such as polylactic acid (PLA) and polyethylene glycol plasticiser (PEG-400) in a ratio of 95/5 by volume of PLA/PEG-400.
(3) 1/99 by volume of HNT/PLA.

Ultrasound is applied to disperse and homogenise the suspension.

During drying, the solvent is removed at low pressure, recovering the solvent and obtaining the initial mixture in granule form. In order to ensure the complete removal of the solvent, the granules are dried in an oven at 60°C for at least 24 h.

In order to determine the operating temperature range, the melting temperature and initial decomposition temperature of the mixture were determined by differential scanning calorimetry (DSC) and thermogravimetric analysis (DGA), respectively, being the printing margins:
(1) 152°C and 212°C, for HA/Polymer composite materials
(2) 149°C and 264°C, for Mg/Polymer composite materials
(3) 150°C and 265°C, for HNT/PLA composite materials

The mixtures are extruded at a temperature between 155°C and 200°C in a single-use extruder with a 2.00 mm diameter output nozzle, to obtain a filament with a diameter less than 3.00 mm.

With the extruded filament of each composition, a three-dimensional piece is printed using a conventional 3D printer to which a head with a 3.00 mm inlet and a 0.3 mm output nozzle are coupled, maintaining a plate temperature of 60°C and a nozzle temperature of:
(1) 160°C, for HA/Polymer composite materials
(2) 155°C, for Mg/Polymer composite materials
(3) 182°C, for HNT/PLA composite materials

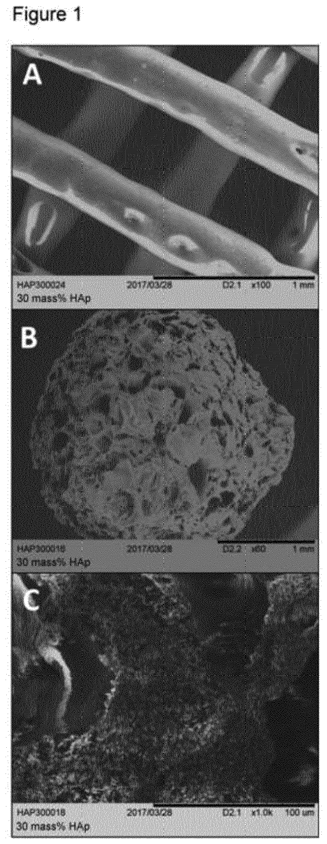

Figure 1 shows micrographs at different magnifications of the structure of the final 3D piece, printed using the initial mixture of composition (1): 15/85 by volume of HA/PLA. The dispersion of the HA and the polymer matrix can be observed in the detail (1C).

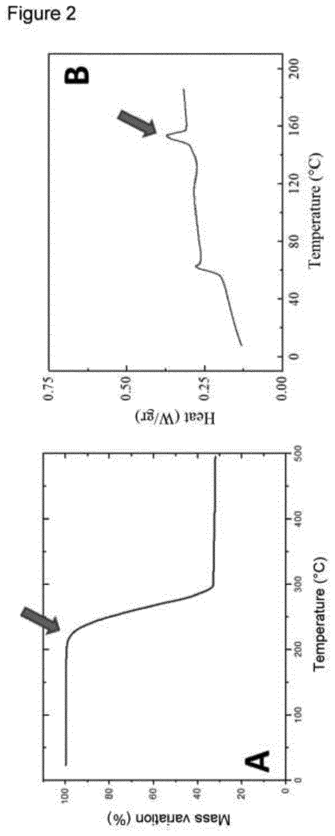

Figure 2 shows the ATG (2A) and DSC (2B) of the granules of composition (1): 15/85 by volume of HA/PLA. The temperatures that determine the thermal window are indicated in both graphs: melting temperature and degradation onset temperature.

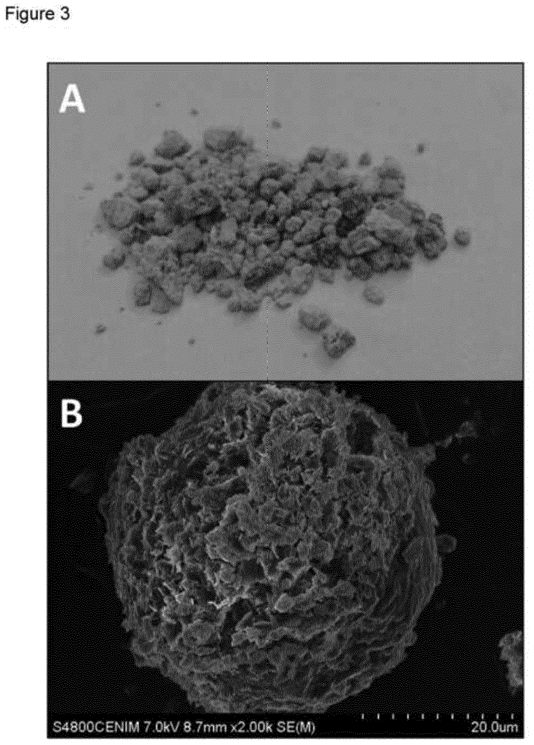

Figure 3A shows a photograph of the initial mixture in granule form and figure 3B shows a detailed micrograph of the mixture of composition (2): 7/93 by volume of Mg/Polymer, showing how a Mg particle is surrounded by a polymer.

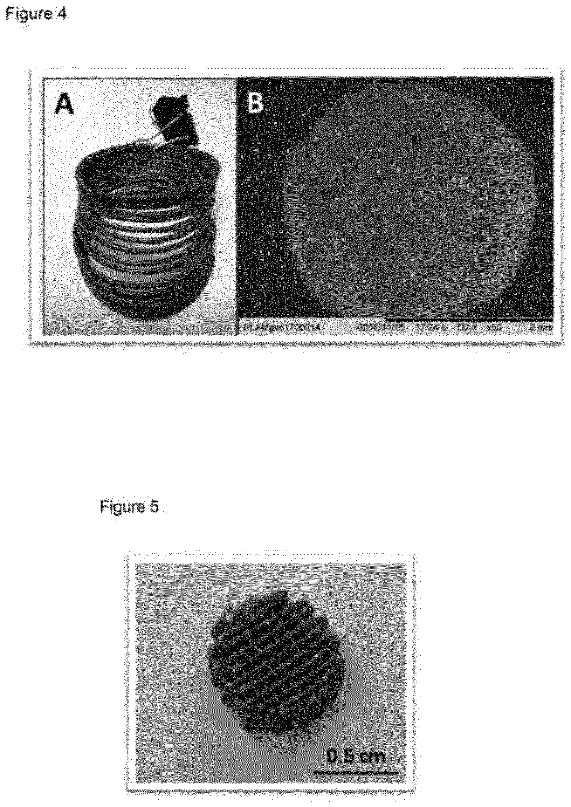

Figure 4A shows a photograph of the filament extruded from the mixture of composition (2) shown in figure 3 and a micrograph of the cross-section thereof, wherein the dispersion of the Mg in the polymer matrix can be observed.

Figure 5 shows a final 3D piece printed in scaffold form using the filament shown in figure 4, obtained from the initial mixture of composition (2).

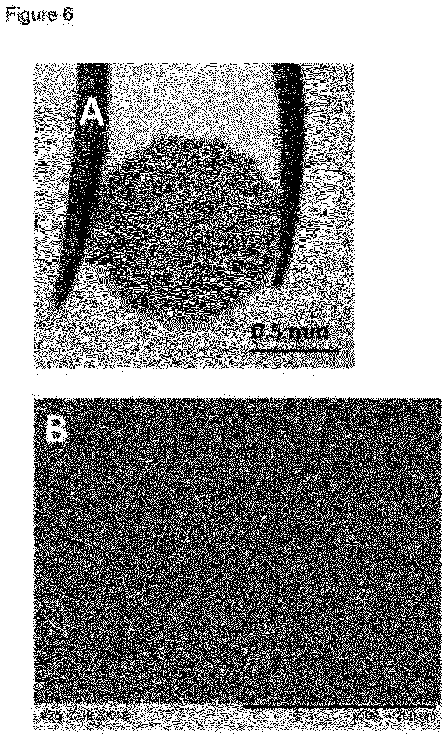

Figure 6A shows a photograph of a final three-dimensional piece, printed in scaffold form, and figure 6B shows a micrograph with the microstructure of the composite material (3), wherein the dispersion of the NTHs in the PLA matrix can be observed.

### Example 2: Printing of final pieces of a 100% ceramic material.

Suspensions of ceramic particles are prepared by adding a cationic polyelectrolyte as a stabiliser/dispersant, such as:
(1) Hydroxyapatite particles (HA), with an average particle size of 2 µm, with a concentration <35% by volume in aqueous medium at a fixed pH of 8, adding ammonium tetramethyl (HTMA). Polyethyleneamine (PEI >25,000 KDa) is added to this suspension in a proportion of 0.2% by weight with respect to the weight of the ceramic powder. The mixture is subjected to a homogenising milling process for 45 min.
(2) Alumina particles (Al₂O₃), with an average particle size of 0.5 µm, with a concentration <37% by volume in aqueous medium. An anionic polyelectrolyte as a stabiliser and the ammonium salt of a polyacrylic acid (PAA) in a proportion of 1% by weight with respect to the weight of the ceramic powder are added to this suspension and the mixture is subsequently subjected to a homogenising milling process for 2 h.
(3) Zinc oxide nanoparticles (ZnO), with an average particle size of <30 nm, with a concentration <5 % by volume in aqueous medium. A surfactant is added to this suspension as a stabiliser and hexadecyltrimethylammonium bromide (CTAB), in a proportion of 3% by weight with respect to the weight of the ceramic powder, are added to this suspension and the mixture is subsequently dispersed applying ultrasound for 1 min. using a 400 W probe.

The resulting suspensions are centrifuged twice, a first time to remove the water and change the solvent for tetrahydrofuran (THF) and a second time to remove this last organic solvent. The particles modified with the polyelectrolyte are added under mechanical stirring to a polymer solution in THF in the desired proportion, being said proportion:
(1) 40/60 by volume of HA/Polymer, being the polymer a mixture of a thermoplastic such as polylactic acid (PLA) and polyethylene glycol plasticiser (PEG-400) in a ratio of 95.3/4.7 by volume of PLA/PEG-400.
(2) 50/50 by volume of Al₂O₃/Polymer, being the polymer a mixture of a thermoplastic such as polylactic acid (PLA) and polyethylene glycol plasticiser (PEG-400) in a ratio of 80/20 by volume of PLA/PEG-400.
(3) 30/70 by volume of ZnO/PLA.

Ultrasound is applied to disperse and homogenise the suspension.

During drying, the solvent is removed at low pressure, recovering the solvent and obtaining the initial mixture in granule form. In order to ensure the complete removal of the solvent, the granules are dried in an oven at 60°C for at least 24 h.

In order to determine the operating temperature range, the melting temperature and initial decomposition temperature of the mixture were determined, as described in example 1.

The mixtures (1) and (2) were extruded at a temperature between 160°C and 200°C in a single-use extruder with a 2.00 mm diameter output nozzle, to obtain a filament with a diameter less than 3.00 mm.

The filament extruded from the mixture (2) was subjected to heat treatment to thermally decompose the polymer phase and consolidate/densify the ceramic structure; maintaining a constant peak temperature of 1550°C for 60 min., with heating and cooling ramps of 5°C/min. After the heat treatment, dense 100% Al₂O₃ filaments were obtained.

With the filament extruded from the mixture (1), a three-dimensional piece is printed using a conventional 3D printer to which a head with a 3.00 mm inlet and a 0.3 mm output nozzle are coupled, maintaining a plate temperature of 60°C and a nozzle temperature of 160°C, for HA/Polymer composite materials.

The printed material was subjected to heat treatment to thermally decompose the polymer phase and consolidate/densify the ceramic structure; maintaining a constant peak temperature of 1250°C for 90 min, with heating and cooling ramps of 5°C/min. After the heat treatment, a three-dimensional 100% HA piece with a porous structure was obtained.

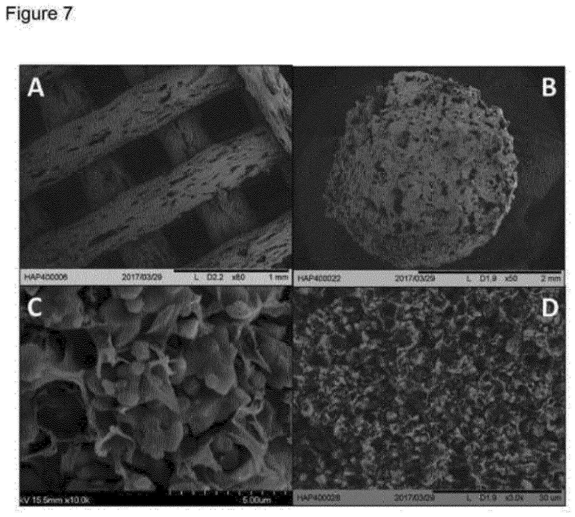

Figure 7 shows micrographs at different magnifications of the scaffold structure of the material printed using the initial mixture of composition (1). The detail of figure 7A shows the rough surface of the material. The detail of figure 7B shows a rod diameter of approximately 2 mm. The detail of figure 7D shows the dispersion of the HA particles in the polymer matrix. The detail of figure 7C shows that with the volume ratio of 40/60 of HA/Polymer, the HA particles are in contact forming a compaction network, which will enable the consolidation of the ceramic material during sintering and its structural stability once the polymer has been removed during the thermal process.

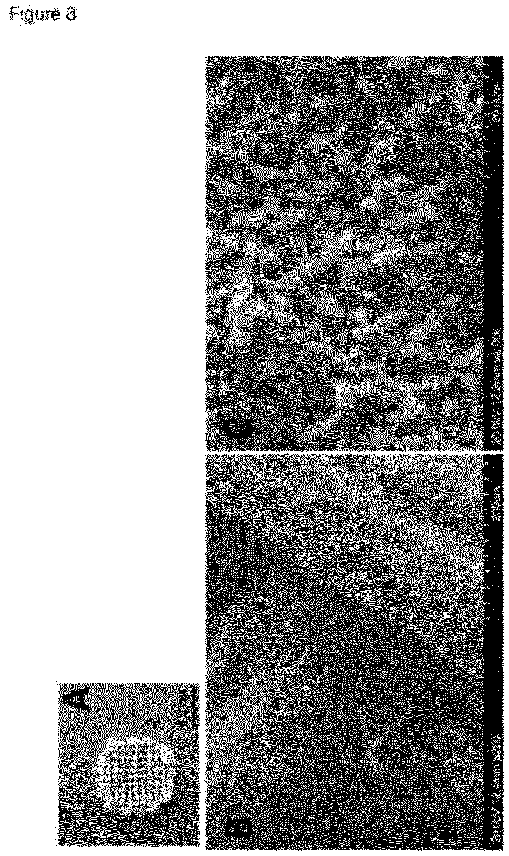

Figure 8 shows a photograph of the final piece obtained after thermally treating the material shown in figure 7. Figure 8A shows the 100% HA final piece with porous structure obtained after sintering, while figure 8B shows the micrograph of the scaffold structure, and figure 8C shows a detail of the 100% HA porous microstructure of the consolidated ceramic piece.

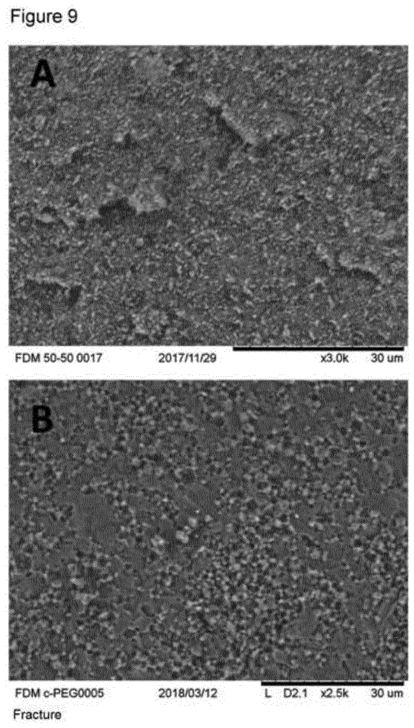

Figure 9 shows a detail of the filament microstructures obtained from the composition (2), before (9A) and after (9B) of the sintering heat treatment. Here the dense 100% Al₂O₃ microstructure obtained after the heat treatment can be observed.

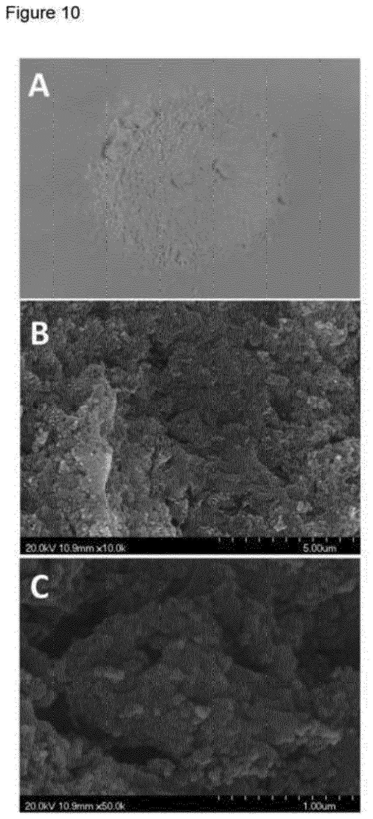

Figure 10 shows a photograph (10A) and micrographs (10B and 10C) of the granules obtained from the mixture of composition (3). The detail of the micrograph of figure 10C shows the homogeneous dispersion of the nanometric phase and the polymer phase.

## Claims

1. A method for obtaining a piece by fused filament deposition modeling comprising the following steps:
a) preparing a dispersed and stable suspension of inorganic particles,
b) removing the solvent from the suspension obtained in step (a),
c) redispersing the product obtained in step (b) in a polymer solution comprising at least one thermoplastic polymer or copolymer,
d) drying the product obtained in step (c) at low pressure in a rotary evaporator or by freezing-sublimation,
e) determining the extrusion window of the product obtained in step (d),
f) extruding the product of step (d) in a temperature range between the melting temperature and the initial decomposition temperature, and
g) printing the 3D pieces using the product obtained in step (f) by means of the fused filament deposition modeling technique.

2. The method according to claim 1, wherein the inorganic particles are metallic powder, ceramic powder or a combination thereof.

3. The method according to any of claims 1 or 2, wherein the inorganic particles are metallic powder selected from biocompatible metals, refractory metals and a combination thereof.

4. The method according to any of claims 1 or 2, wherein the inorganic particles are ceramic powder selected from bioactive ceramics, semi-conducting ceramics, ceramics with high chemical resistance in extreme conditions and any combination thereof.

5. The method according to any of claims 1 to 4, wherein step (b) is carried out by means of centrifuging or filtration.

6. The method according to any of claims 1 to 5, wherein step (c) is carried out by mixing and redispersing the inorganic particles in the polymer mixture using mechanical or sonic methods.

7. The method according to any of claims 1 to 6, wherein the thermoplastic is selected from polyethylene, polylactic acid, polyethylene glycol, polycaprolactone, nylon, acrylonitrile and styrene butadiene.

8. The method according to any of claims 1 to 7, wherein the polymer solution of step (c) also comprises a plasticiser, a dye or an anti-foaming agent.

9. The method according to any of claims 1 to 8, wherein step (e) is carried out by means of thermogravimetry and/or differential scanning calorimetry.

10. The method according to any of claims 1 to 9, wherein
• the piece is purely ceramic, purely metallic or is a piece formed from a ceramic-metal mixture and
• step (a) is carried out by surface adsorption of a surfactant or a polyelectrolyte, the method comprises the following additional steps:
(h), after step (g), of removing the polymer comprising the product obtained in step (g) by dissolution or thermal decomposition, and
(i) sintering the product obtained in step (h).

11. The method according to claim 10, wherein the surfactant of step (a) is selected from dodecylsulfate, oleimine and hexadecyltrimethylammonium bromide.

12. The method according to claim 10, wherein the polyelectrolyte of step (a) is selected from a polyacrylate, a citrate or a polyamine.

13. The method according to any of claims 10 to 12, wherein the piece is porous and the volume percent of the inorganic particles in the mixture obtained in step (d) is greater than 30%.

14. The method according to any of claims 10 to 12, wherein the piece is dense and the volume percent of the inorganic particles in the mixture obtained in step (d) is greater than 50%.

15. The method according to any of claims 1 to 9, wherein
• the piece is a composite material,
• step (a) is carried out by surface adsorption of a polyelectrolyte and
• the volume percent of the inorganic particles in the mixture obtained in step (d) is greater than 1 %.

16. The method according to claim 15, wherein the polyelectrolyte of step (a) is selected from a polyacrylate, a citrate or a polyamine.

17. The method according to any of claims 15 or 16, wherein the volume percent of the inorganic particles in the mixture obtained in step (d) is greater than 15%.
